# EUROPEAN PATENT SPECIFICATION

(11) **EP 0 501 491 B1**
(45) Date of publication and mention of the grant of the patent: **28.02.1996**
(21) Application number: 92103394.0
(22) Date of filing: 27.02.1992
(51) Int. Cl.: C08F 4/636, C08F 10/02

(54) **Process for the preparation of a solid component of a catalyst for the (co)polymerization of ethylene**
Verfahren zur Herstellung eines festen Katalysatorbestandteils für Äthylen(co)polymerisation
Procédé de préparation d'un composant solide de catalyseur pour (co)polymérisation d'éthylène

(30) Priority: 28.02.1991 IT MI910521
(43) Date of publication of application: 02.09.1992
(73) Proprietor: ENICHEM S.p.A., I-20124 Milano (IT)
(72) Inventor: Luciani, Luciano, Dr., I-44100 Ferrara (IT); Milani, Federico, Dr., I-45030 Santa Maria Maddalena, Rovigo (IT); Pondrelli, Maddalena, Dr., I-40054 Budrio, Bologna (IT); Invernizzi, Renzo, Dr., I-20147 Milan (IT)
(74) Representative: Barz, Peter, Dr.

(56) References cited:
- EP-A- 0 170 384
- EP-A- 0 177 189

## Description

The present invention relates to a process for the preparation of a solid component of a catalyst for the (co)polymerization of ethylene (in suspension or in the gaseous phase).

There are known in the art catalytic systems of the Ziegler-Natta type, active in the polymerization of alpha-olefins, which generally comprise a combination of an organometallic compound of elements of groups I to III and a compound of a transition metal belonging to groups IV to VI of the Periodic Table (Boor Jr., "Ziegler-Natta Catalysts and Polymerization", Academic Press, New York, 1979). Generally as organometallic compound an alkyl aluminium compound and as transition metal compound a titanium halide are used. It is also known that it is possible to bind or deposite said titanium halide to or on, resp., a solid and granular carrier (Karol F.J., Catal. Rev. Sci. Eng. 26, 384, 557-595, (1984)).

It is further known to activate the magnesium chloride and to use it for the preparation of catalysts comprising titanium salts, highly active in the polymerization of olefins, as described, e.g., in DE-A-2,153,520 (CA 77, 62505, 1972); DE-A-2,638,429 (CA 83, 59870, 1972); DE-A-2,638,429 (CA 86, 140706, 1975); BE-A-848,427 (CA 87, 68839, 1977); and JP-A-79/118,484 (CA 92, 59450, 1979). Finally, it is known that heterogeneous catalysts for the polymerisation of alpha-olefins are capable of reproducing their own morphology in an equivalent morphology of the polymer; this is made possible by more or less complicated technological conditions for the synthesis of the catalyst (Karol F.J., ibid., and McDaniel M.P., J. Polym. Sci., Polym. Chem. Ed. 19, 1967-1976 (1981)).

The market demands polyolefins which are more and more suitable for satisfying the most different application requirements. On the other hand there is the need to simplify the production processes for polyolefins, in order to reduce investment and production costs. In particular, there is felt a need to have available catalysts which are not only simple and inexpensive, but are also capable of producing - if possible in one single polymerization step - olefinic homopolymers and copolymers which are suitable for extrusion and/or molding processes.

Eaborn C.E. in "Organo Silicon Compounds"_{,} Butterworths Scientific Publications, London 1960; Rochow E.G. in "The Chemistry of Silicon", Elsevier, New York, 1975; and Voorhoeve R.J.H. in "Organosilanes", Elsevier, New York, 1967, describe an alkylation reaction of a dialkyl magnesium or alkyl magnesium halide and silicon tetrachloride which affords a non-crystalline solid product. M.P. McDaniel, J. Catal., 76, 17 (1982); M.P. McDaniel, J. Phys. Chem., 85, 532 (1981); C.G. Armistead et al., J. Phys. Chem., 73/II, 3947 (1969); R.J. Peylar et al., J. Catal., 20, 309 (1971); and J. Kunawicz et al., Trans. Faraday Soc., 67, 3848 (1971) describe the adsorption of a dialkyl magnesium or alkyl magnesium chloride, as well as of halogenated compounds, such as silicon tetrachloride and titanium tetrachloride, on silica or other inert carriers containing hydroxyl groups.

It has now been found that a dialkyl magnesium and/or an alkyl magnesium halide are able to interact with a silicon chloride on a non-activated, solid and porous carrier on which a compound of a transition metal such as hafnium, zirconium or vanadium has previously been adsorbed. It has also been found that the solid product of this reaction is able to interact with a titanium compound to afford a solid component of a catalyst which is highly active in the homopolymerization of ethylene and the copolymerization of ethylene with alpha-olefins and dienes. Thus, according to the present invention it is possible to obtain, in a simple and cheap way, solid catalyst components which are highly active in one-step ethylene (co)polymerization processes in suspension or in the gaseous phase and are capable of yielding ethylene polymers having the desired density values, a medium to broad molecular weight distribution and a monomodal distribution of the molecular weights.

Accordingly the present invention provides a process for the preparation of a solid component of a catalyst for the (co)polymerization of ethylene which contains magnesium, chlorine, silicon, titanium and at least one other metal selected from hafnium, zirconium and vanadium, supported on a granular solid carrier, said process comprising the following steps:
(i) adsorbing a compound of at least one metal M selected from hafnium, zirconium and vanadium on a non-activated granular and porous solid carrier by contacting this carrier with a solution of said compound of the metal M in an organic solvent, followed by removal (e.g. by evaporation) of the solvent;
(ii) impregnating the solid carrier of step (i) by contacting it with a solution of a dialkyl magnesium and/or alkyl magnesium halide in an organic solvent, followed by removal (e.g. by evaporation) of the solvent;
(iii) contacting the solid carrier of step (ii) with a silicon chloride and allowing it to interact therewith; and
(iv) contacting the solid carrier of step (iii) with a titanium compound and allowing it to interact therewith to give a solid catalyst component; the amount of said carrier in said solid catalyst component being adjusted to from 30 to 90% by weight and the atomic ratios of titanium, metal M, magnesium and silicon in the reagents being adjusted as follows: Ti : M : Mg : Si = 1 : 0.1 - 3 : 1 - 20 : 0.1 - 50.

EP-A-177189 and 170384 disclose processes similar to the present one wherein the order of steps (i) and (ii) above is inverted.

In the following the process of the invention will be described in more detail with reference to preferred embodiments thereof.

### Step (i)

In step (i) of the process according to the present invention, at least one compound of hafnium, zirconium and/or vanadium is adsorbed on a non-activated, granular and porous solid carrier.

Preferred carriers for said purpose are spheric carriers which have an average particle size of the order of µm and a relatively narrow distribution of the particle sizes. The carriers can be of organic or inorganic nature. Examples of carriers of organic nature are porous and foamed olefin and styrene polymers. Among the carriers of inorganic nature, silica and alumina are preferred. A particularly preferred carrier is microspheroidal silica having an average particle size of from 20 to 100 µm, a BET surface area of from 150 to 400 m²/g, a total porosity of at least 60% and a pore radius of from 5 to 20 nm. It is one advantage of the present invention that the silica is used as such, without any preceding activation.

The vanadium, zirconium and hafnium compounds useful for the impregnation of the carrier are generally selected from the corresponding chlorides, oxychlorides and alkoxides, and preferably from the chlorides, such as vanadium trichloride, zirconium tetrachloride and hafnium tetrachloride.

In step (i) of the present process a solution of the metal M in an organic solvent is prepared. Examples of solvents which are suitable for said purpose are (e.g. C₁-C₄) alkyl esters of aliphatic or aromatic carboxylic acids (e.g. formic acid, acetic acid, propionic acid, benzoic acid) and aliphatic ethers, especially cyclic ethers. Specific examples of such solvents are ethyl formate, methyl acetate, ethyl acetate, propyl acetate, isopropyl acetate and tetrahydrofuran. The most preferred solvent is ethyl acetate. Solutions having a concentration of the compound(s) of metal(s) M of from 1 to 2% by weight will generally be used and preferably said solutions are oversaturated. To the solution of the compound(s) of metal(s) M thus obtained the granular carrier may be added, preferably keeping the weight ratio carrier/compound(s) of metal(s) M equal to at least 2/1. The impregnation of the carrier is preferably carried out by heating the resulting suspension at a temperature higher than room temperature, particularly at a temperature of from 70 to 80°C, for from 0.5 to 2 hours (preferably for about 1 hour).

By working under these conditions, the compound(s) of the metal(s) M is (are) adsorbed on the carrier, presumably by a mechanism which involves physical and chemical phenomena, possibly reactions involving the hydroxyl groups of the carrier.

At the end of the impregnation step, the solvent is removed, e.g., by evaporation, preferably under reduced pressure and at temperatures equal or similar to those used for the impregnation, and the impregnated carrier is recovered.

### Step (ii)

In step (ii) of the process of the present invention, the solid carrier obtained after step (i) is impregnated by contacting it with a solution of dialkyl magnesium and/or a magnesium alkyl halide, preferably chloride, in an organic solvent.

Examples of magnesium compounds suitable to this purpose are those which can be represented by the formulae MgR'R'' and MgRX wherein R', R'' and R independently represent a linear or branched C₁-C₁₀ (e.g. C₁-C₆) alkyl group and X represents a halogen atom, preferably a chlorine atom. Specific examples of corresponding magnesium compounds are diethyl magnesium, ethyl butyl magnesium, dihexyl magnesium, butyl octyl magnesium, dioctyl magnesium and the corresponding chloro derivatives. Solvents useful for dissolving the above compounds are organic solvents which are liquid under the working conditions and inert (not reactive) towards the other components. Examples of suitable solvents are hydrocarbons, especially aliphatic hydrocarbons (e.g. pentane, isopentane, hexane, heptane and octane).

In step (ii) of the present process the carrier impregnated in step (i) is added to the solution of the magnesium compound while preferably keeping a molar ratio magnesium compound(s)/compound(s) of the metal(s) M equal to or higher than 1/1. Preferably the resulting suspension is kept at a temperature of from room temperature (20-25°C) to the boiling point of the solvent used, for 10 minutes to 2 hours, depending on the temperature selected. Most preferably this step is carried out at a temperature of 50 to 70°C for 0.5 to 1 hour.

The deposition of the magnesium compound(s) on the carrier impregnated in step (i) takes place in said step (ii). Possibly said deposition involves some interaction between the magnesium compound(s) and hydroxyl groups of the carrier which have not interacted in step (i).

At the end of the treatment, the solid is separated from the solution, for instance by filtration, and preferably subjected to washing with a liquid aliphatic hydrocarbon and optionally dried.

### Step (iii)

In step (iii) of the present process, the solid carrier treated in step (ii) is contacted and allowed to react with a silicon chloride.

Examples of silicon chlorides suitable for this purpose are silicon tetrachloride and chlorosilanes such as trichlorosilane, vinyltrichlorosilane, trichloroethoxysilane and chloroethyltrichlorosilane. Silicon tetrachloride is particularly preferred.

In step (iii) of the present process, the solid obtained after step (ii) is preferably suspended in an inert (non reactive) solvent, generally in an aliphatic hydrocarbon such as pentane, isopentane, hexane, heptane and octane, and to the suspension thus obtained a silicon chloride is added. Preferably the thus obtained suspension is heated at a temperature of from 40 to 100°C for 0.5 to 5 hours, most preferably at from 70 to 95°C for 1 to 2 hours.

It is assumed that in this step a chlorination reaction between the magnesium compound deposited in step (ii) and the silicon compound takes place, resulting in the formation of a solid which is highly reactive with titanium compounds.

At the end of the treatment the solid is usually separated from the solution, for instance by filtration, and preferably is subjected to a washing with a liquid aliphatic hydrocarbon and is optionally dried.

### Step (iv)

In step (iv) of the present process the solid carrier treated in step (iii) is contacted and allowed to interact with one or more titanium compounds to afford a solid catalyst component.

Examples of titanium compounds suitable for this purpose are the chloride and the alkoxides and chloro alkoxides of titanium. Specific examples thereof are titanium tetrachloride, titanium tetra-n-propylate, titanium tetra-n-butylate, titanium tetra-i-propylate, titanium tetra-i-butylate and the corresponding titanium mono- and dichloro alkoxides. Mixtures of two or more titanium compounds can also be used.

In step (iv) the solid obtained after step (iii) is preferably suspended in an inert organic solvent, such as a hydrocarbon solvent, especially an aliphatic hydrocarbon (hexane, heptane, octane, etc.) and the titanium compound(s), optionally dissolved in the same or a similar solvent, is (are) added to the suspension. Usually the amount of titanium compound is such that the resulting atomic ratio titanium/silicon (in the silicon chloride(s) of step (iii)) ranges from 1:3 to 1:40. The suspension thus obtained is preferably kept at a temperature of from 50 to 100°C, particularly 60 to 90°C, for 0.5 to 5 hours, particularly 1 to 2 hours.

By proceeding in the above manner, there is obtained a solid catalyst component which can be recovered from the corresponding suspension, for instance by evaporating the organic solvent under normal or reduced pressure.

The solid catalyst component obtained by the present process contains magnesium, chlorine, silicon, titanium and at least one other metal selected from hafnium, zirconium and vanadium, supported on a non-activated solid, granular and porous carrier, preferably a silica carrier.

According to a preferred embodiment the carrier accounts for 40 to 70% by weight of the solid catalyst component. Preferred atomic ratios in the catalytically active portion thereof are Ti:M:Mg = 1:0.5-2:2-8. In this solid catalyst component the titanium will be partially in the trivalent state and partially in the tetravalent state, the ratio of the two forms depending mainly on the particular titanium compound(s) used in step (iv) and on the ratio Mg/Si (steps (ii) and (iii)).

Particularly when in step (iv) an alkoxide or a chloro alkoxide of titanium, or a mixture of alkoxide and titanium chloride was used, the solid catalyst component is suitably subjected to an activation treatment. This activation is carried out in a further step (v) by contacting the component obtained at the end of step (iv) with an alkyl aluminium chloride, such as e.g. diethyl aluminium chloride, ethyl aluminium sesquichloride and diisobutyl aluminium chloride. More particularly, the solid catalyst component, suspended in an inert organic solvent, such as a hydrocarbon solvent (hexane, heptane etc.), may be contacted with an alkyl aluminium chloride, the ratio chlorine atoms in the alkyl aluminium chloride to alkoxy groups of the alkoxide and/or chloro alkoxide of titanium preferably ranging from 0.1/1 to 10/1. The suspension is preferably kept at a temperature of from 10 to 100°C, for a period of time of from 10 minutes to 5 hours. At the end of the activation treatment the solid catalyst component can be recovered from the corresponding suspension, e.g. by filtration, washed with a hydrocarbon solvent and, if desired, dried. By this activation treatment the chlorine content in the solid catalyst component is increased and the ratio of Ti(IV) to Ti(III) is also reduced. Typically, the solid catalyst component contains from 10 to 50% Ti(III) based on the total titanium, the remainder being Ti(IV).

Catalysts comprising the above solid catalyst component, preferably in combination with an organo-metallic compound of aluminium (co-catalyst) which usually is selected from aluminium trialkyls and alkyl aluminium halides (especially chlorides) (preferably containing from 1 to 6 carbon atoms in the alkyl portion thereof can be used for for the (co)polymerization of ethylene. Among the aluminum trialkyls, triethyl aluminium, tributyl aluminium, triisobutyl aluminium and trihexyl aluminium are preferred. In said catalysts the atomic ratio of aluminium (in the co-catalyst) to titanium (in the solid catalyst component) generally varies from 0.5:1 to 1,000:1 and preferably from 50:1 to 200:1.

These catalysts are highly active in the homopolymerization of ethylene and the copolymerization of ethylene with one or more alpha-olefins and/or dienes and can be used in polymerizations in suspension in an inert diluent or in the gas phase, in a fluid bed or stirred bed. Suitable alpha-olefins and dienes are generally those which contain from 3 to 15 carbon atoms, such as butene-1, hexene-1, 4-methyl-pentene-1, octene-1, undecene-1, ethylidene norbornene and 1,4-hexadiene. General conditions for the polymerization usually are a temperature of from 50 to 100°C, a total pressure of from 5 to 40 bar and a partial pressure ratio of hydrogen to ethylene of from 0:1 to 10:1. Said catalysts yield ethylene homopolymers and copolymers having a high to low density, a medium to broad molecular weight distribution and a monomodal molecular weight distribution. In any case a high productivity in the olefinic polymer is achieved and the polymer thus obtained shows a very good rheology and in particular is in the form of not crumbly granules more than 95% by weight of which have a granule size of from 250 to 1000 µm, finer granules being absent.

The following examples are to further illustrate the present invention.

In these examples there is used, as carrier for the solid catalyst component, a microspheroidal silica having an average particle diameter of 40 µm and showing the following characteristics: apparent density 0.27 g/cm³; surface area (BET) 307 m²/g; total porosity 92.6% and average radius of the pores 13.2 nm.

### EXAMPLE 1

In a 500 ml round bottom flask provided with reflux cooler, mechanical stirrer and thermometer, 4.4 g (13.7 mmols) of hafnium tetrachloride and 220 ml of anhydrous ethyl acetate are introduced under nitrogen. The mixture is heated at 77°C for about 1 h in order to dissolve the hafnium tetrachloride. In the solution thus obtained 17 g of microspheroidal silica are suspended and the resulting suspension is kept at the reflux temperature for 1 h. Thereafter the ethyl acetate is removed from the solution by evaporation.

The solid thus obtained is suspended in 228 ml of a n-heptane solution containing 9.142 g (54.9 mmols) of Mg(C₄H₉)_{1.5}(C₈H₁₇)_{0.5}. The suspension is kept at 60°C for 30 minutes whereafter the solid is recovered by filtration, washed several times with n-heptane and is resuspended in about 200 ml of n-heptane.

To the suspension thus obtained 35 ml (475 mmols) of silicon tetrachloride are added. The resulting mixture is kept at 75°C for 1 h and thereafter the solid is recovered by filtration, washed several times with n-heptane and resuspended in 200 ml of n-heptane.

To the suspension thus obtained there are added 1.54 ml (14 mmols) of titanium tetrachloride. The resulting mixture is kept at 95°C for 2 hours and finally is concentrated to dryness by evaporating the solvent.

Thereby 25.5 g of a solid catalyst component containing 14.9% by weight of chlorine, 3.6% by weight of magnesium and 2.5% by weight of titanium are obtained. 31% of the Ti are in the trivalent state and the rest is Ti(IV).

The main conditions for obtaining the solid catalyst component are summarized in Table I, particularly:
- the atomic ratios of titanium, hafnium, magnesium and silicon;
- the weight ratio of hafnium tetrachloride and silica (HfCl₄/SiO₂);
- the % by mols of titanium employed as TiCl₄ based on the total titanium employed (% TiCl₄/Ti total);
- the % by mols of titanium employed as titanium tetrabutylate based on the total titanium employed (% Ti(OBu)₄/Ti total);
- the % by weight of trivalent titanium based on the total titanium in the solid catalyst component (Ti(III)% b.w.).

The solid catalyst component prepared as described above is used in a series of ethylene polymerization tests (tests 1.1 to 1.9). More particularly, the polymerization is carried out by working in a 5 litre autoclave which contains 2 litres of n-hexane. Furthermore, it is operated under ethylene and hydrogen pressure, using 100 mg of the solid catalyst component and alkyl aluminium as cocatalyst. The following specific polymerization conditions are given in Table II below:
- the total pressure in bar (Press.(bar));
- the polymerization temperature in °C (Temp.(°C));
- the polymerization time in hours (time(hours));
- the ratio of hydrogen pressure to ethylene pressure (P(H₂)/P(C₂H₄));
- the cocatalyst used (cocat.) (TEA = triethyl aluminium; TIBA = triisobutyl aluminium);
- the molar ratio of aluminium in the cocatalyst to titanium in the solid catalyst component (Al/Ti (mols)).

The results of the polymerization are reported in Table III. More particularly, this table reports the values relating to:
- Yield: expressed as kg polyethylene per g titanium and hour;
- MFI: (Melt Flow Index; ASTM D-1238) of the obtained polyethylene, in g/10 min, expressed as: MFI E = MFI at 2.16 kg; MFI P = MFI at 5.00 kg; MFI F = MFI at 21.6 kg;
- F/E: ratio MFI at 21.6 kg to MFI at 2.16 kg;
- F/P: ratio of MFI at 21.6 kg to MFI at 5.00 kg;
- Dens: density of polyethylene in g/ml (ASTM D-1505);
- D. app.: apparent density of polyethylene in g/ml (ASTM D-1895);
- Slid.: sliding of polyethylene expressed in seconds, determined according to ASTM D-1895.

Finally, in Table IV the distribution (percent by weight) of the granule sizes (µm) of the polyethylene produced is reported.

### EXAMPLE 2

In the preparation of the solid catalyst component, the procedure of example 1 is followed, but titanium tetrabutylate in a quantity of 4.80 ml (14 mmols) is used as titanium compound.

Thus, 22 g of a solid are obtained which is suspended in 200 ml of n-hexane. To the suspension 20.3 ml of a 40.5% by weight solution of isobutyl aluminium dichloride (8.08 g; 42.25 mmols) in n-hexane are added over 30 minutes and at a temperature of 25 - 30°C. At the end of the addition the temperature is raised to 66°C and the suspension is kept at this temperature for 1 hour. The solid is washed several times with solvent and thereafter is dried under a nitrogen stream at 40°C.

Thereby, 20.4 g of a solid catalyst component containing 13.8% by weight of chlorine, 3.4% by weight of magnesium, 1.6% by weight of titanium and 2.4% by weight of aluminium are obtained. 24% of the titanium are in the trivalent state and the rest is Ti(IV) (Table I).

This solid catalyst component is used in a test for the ethylene polymerization and the results are reported in Tables II to IV.

### EXAMPLE 3

The preparation of the solid catalyst component is carried out as in example 1, but a mixture of 2.40 g (7.0 mmols) of titanium tetrabutylate, 0.8 ml (7.2 mmols) of titanium tetrachloride and 20 ml of n-heptane is used as titanium compound.

20 g of a solid are thus obtained and are suspended in 120 ml of n-hexane. To said suspension 9.6 ml of a 40.5% by weight solution of isobutyl aluminium dichloride (3.09 g; 19.94 mmols) in n-hexane are added over 30 minutes and at 25 - 30°C. At the end of the addition the whole mixture is heated at 66°C for 1 hour. The solid is washed several times with solvent and thereafter is dried under a nitrogen stream at 40°C.

Thus, 19.4 g of a solid catalyst component containing 13.1% by weight of chlorine, 3.15% by weight of magnesium and 2.3% by weight of titanium are obtained. 30% of the titanium are in the trivalent state and the rest is Ti(IV) (Table I).

The above solid catalyst component is used in an ethylene polymerization test and the results are reported in Tables II to IV.

### EXAMPLE 4

In a 500 ml round-bottom flask provided with reflux condenser, mechanical stirrer and thermometer, 2.2 g (6.87 mmols) of hafnium tetrachloride and 110 ml of anhydrous ethyl acetate are introduced under nitrogen. The mixture is heated at 77°C for 1 hour in order to dissolve the hafnium tetrachloride. In the solution thus obtained 17 g of microspheroidal silica are suspended and the resulting suspension is kept at the reflux temperature for 1 hour. Thereafter, the ethyl acetate is removed from the suspension by evaporation.

The solid thus obtained is suspended in 228 ml of a n-heptane solution containing 9.142 g (54.9 mmols) of Mg(C₄H₉)_{1.5}(C₈H₁₇)_{0.5}. The resulting mixture is kept at 60°C for 30 minutes, whereafter the solid is recovered by filtration, washed several times with n-heptane and is resuspended in 200 ml of n-heptane.

To the suspension thus obtained 55 ml (475 mmols) of silicon tetrachloride are added and the resulting mixture is kept at 75°C for 1 hour whereafter the solid is recovered by filtration, washed several times with n-heptane and is resuspended in 200 ml of n-heptane.

To the suspension thus obtained 1.54 ml (14 mmols) of titanium tetrachloride are added; following contact of the components for 2 hours at 95°C the whole mixture is concentrated to dryness by evaporating the solvent.

Thus, the 22.1 g of a solid catalyst component containing 14.0% by weight of chlorine, 3.4% by weight of magnesium and 2.8% by weight of titanium are obtained. 14% of the titanium are in the trivalent state and the rest is Ti(IV) (Table I).

This solid catalyst component is used in an ethylene polymerization test and the results are reported in Tables II to IV.

### EXAMPLE 5

The procedure of example 4 is followed, but at the beginning 8.8 g (27.47 mmols) of hafnium tetrachloride and 440 ml of anhydrous ethyl acetate are introduced in a 1 liter round-bottom flask.

Thus 28.7 g of solid catalyst component containing 15.2% by weight of chlorine, 3.1% by weight of magnesium and 2.2% by weight of titanium are obtained. 17% of the titanium are in the trivalent state and the rest is Ti(IV) (Table I).

This solid catalyst component is used in an ethylene polymerization test and the results are reported in Tables II to IV.

**TABLE I**

| Ex. No. | Molar ratios of reagents | | | | HfCl₄/SiO₂ | % TiCl₄/Ti tot. | % Ti(OBu)₄/Ti tot. | Ti(III) % b.w. |
|---|---|---|---|---|---|---|---|---|
| | Ti | Hf | Mg | Si | | | | |
| 1 | 1 | 1 | 4 | 35 | 0.26 | 100 | 0.0 | 31 |
| 2 | 1 | 1 | 4 | 35 | 0.26 | 0 0 | 100 | 24 |
| 3 | 1 | 1 | 4 | 35 | 0.26 | 50 | 50 | 30 |
| 4 | 2 | 1 | 8 | 70 | 0.13 | 100 | 0.0 | 14 |
| 5 | 1 | 2 | 4 | 35 | 0.52 | 100 | 0.0 | 17 |

**TABLE II**

| Ex. No. | Press. (bar) | Temp. (°C) | Time (ₕ ) | P(H₂)/P(C₂H₄) | Cocat. | Al/Ti (mols) |
|---|---|---|---|---|---|---|
| 1.1 | 15 | 85 | 1 | 1.1 | TEA | 100 |
| 1.2 | 15 | 85 | 1.5 | 1.1 | TEA | 80 |
| 1.3 | 15 | 85 | 4 | 1.1 | TEA | 25 |
| 1.4 | 15 | 85 | 4 | 0.32 | TEA | 29 |
| 1.5 | 15 | 85 | 4 | 0.62 | TEA | 29 |
| 1.6 | 15 | 80 | 4 | 0.21 | TEA | 29 |
| 1.7 | 15 | 80 | 4 | 0.21 | TIBA | 29 |
| 1.8 | 15 | 80 | 4 | 0.21 | TEA | 30 |
| 1.9 | 15 | 80 | 4 | 0.21 | TIBA | 58 |
| 2 | 15 | 80 | 4 | 0.21 | TEA | 45 |
| 3 | 15 | 80 | 4 | 0.21 | TEA | 31 |
| 4 | 15 | 80 | 4 | 0.21 | TEA | 26 |
| 5 | 15 | 80 | 4 | 0.21 | TEA | 33 |

**TABLE III**

| Ex. No. | Yield | MFI | | | F/E | F/P | Dens. (g/ml) | App. D. (g/ml) | Sliding (sec.) |
|---|---|---|---|---|---|---|---|---|---|
| | | E | P | F | | | | | |
| 1.1 | 36 | 1.25 | 4.80 | 67.1 | 54 | 14 | 0.9657 | 0.31 | 20 |
| 1.2 | 49 | 2.18 | 8.30 | 106 | 89 | 13 | 0.9668 | 0.28 | 24 |
| 1.3 | 181 | 1.23 | 4.79 | 67.9 | 55 | 14 | 0.9633 | 0.32 | 25 |
| 1.4 | 340 | 0.05 | 0.26 | 4.50 | 90 | 17 | 0.9523 | 0.34 | 21 |
| 1.5 | 231 | 0.28 | 1.25 | 20.6 | 74 | 16 | 0.9617 | 0.33 | 22 |
| 1.6 | 255 | 0.02 | 0.11 | 1.76 | 88 | 16 | 0.9500 | 0.34 | 22 |
| 1.7 | 231 | ND | 0.07 | 1.30 | ND | 19 | 0.9500 | 0.34 | 21 |
| 1.8 | 283 | ND | 0.10 | 1.77 | ND | 18 | 0.9511 | 0.33 | 23 |
| 1.9 | 343 | ND | 0.06 | 1.28 | ND | 21 | 0.9521 | 0.34 | 23 |
| 2 | 245 | ND | 0.03 | 0.65 | ND | 22 | 0.9479 | 0.36 | 19 |
| 3 | 175 | 0.03 | 0.16 | 1.62 | 54 | 10 | 0.9511 | 0.39 | 16 |
| 4 | 250 | 0.03 | 0.14 | 2.42 | 81 | 17 | 0.9518 | 0.36 | 20 |
| 5 | 355 | 0.05 | 0.32 | 4.63 | 93 | 14 | 0.9399 | 0.38 | 20 |

**TABLE IV**

| Ex. No. | >2000 % | 2000 -1000 % | 1000 -500 % | 500 -250 % | 250-125 % | 125 -65 % | <63 % |
|---|---|---|---|---|---|---|---|
| 1.1 | 0.2 | 33.4 | 50.6 | 13.2 | 2.2 | 0.2 | 0.2 |
| 1.2 | 0.0 | 0.9 | 51.6 | 40.0 | 6.7 | 0.8 | 0.0 |
| 1.3 | 0.0 | 17.2 | 60.5 | 20.1 | 1.7 | 0.5 | 0.0 |
| 1.4 | 0.1 | 39.7 | 52.2 | 7.3 | 0.1 | 0.6 | 0.0 |
| 1.5 | 0.0 | 23.4 | 61.0 | 13.4 | 1.4 | 0.8 | 0.0 |
| 1.6 | 0.0 | 33.2 | 58.9 | 7.4 | 0.1 | 0.4 | 0.0 |
| 1.7 | 0.1 | 24.4 | 63.9 | 11.1 | 0.5 | 0.0 | 0.0 |
| 1.8 | 0.1 | 32.7 | 55.5 | 11.0 | 0.6 | 0.1 | 0.0 |
| 1.9 | 0.1 | 42.1 | 51.0 | 6.5 | 0.2 | 0.1 | 0.0 |
| 2 | 0.1 | 6.0 | 71.4 | 19.4 | 2.4 | 0.6 | 0.1 |
| 3 | 0.1 | 5.7 | 67.2 | 24.2 | 2.0 | 0.8 | 0.0 |
| 4 | 0.1 | 33.7 | 53.7 | 11.2 | 1.2 | 0.1 | 0.0 |
| 5 | 0.1 | 33.8 | 51.3 | 12.8 | 1.4 | 0.6 | 0.0 |

### EXAMPLE 6

The solid catalyst component obtained in example 1 is used in a fluid bed polymerization reactor. The reactor consists of a pipe having a diameter of 5 cm and a length of 80 cm, containing a porous metal disk on the bottom to allow the gas to bubble upwards through the bed. 5 g of the solid catalyst component are suspended in 100 ml of isobutane and 1 ml of this suspension is introduced into the reactor. Furthermore, a solution comprising 50 mmols of triethyl aluminium in 100 ml of isobutane is prepared. 10 ml of this solution are introduced in the reactor. A gaseous mixture of ethylene and hydrogen (1:1 by volume) is added to the reactor by means of a calibrated rotameter. A portion of the unreacted mixture escapes automatically through a pressure release valve thus maintaining the pressure of the system constant at 20 bar. The escaped gaseous mixture is recycled to the reactor through a compressor and is mixed with the fresh feed. The recycle rate is adjusted by means of a valve for the flux control to obtain a suitable fluidification and mixing level. The temperature in the reactor is controlled by allowing the recycle stream and the fresh feed to pass either through a cooler or through a heater to fix the entry temperature in the reactor. The cocatalyst solution is pumped by means of a calibrated metering pump and is allowed to pass through a coil into a heated bath, to completely evaporate the solution. The vapor stream is then injected in the recycle stream of the ethylene-hydrogen stream. At the beginning of the test 1 ml of the suspension of the solid catalyst component, as indicated above, is injected and the ethylene-hydrogen mixture is allowed to flow. When the system reaches the equilibrium the cocatalyst is fed and the polymerization starts.

The duration of the test is 4 hours with a polymerization temperature of 90°C. A yield of 8.5 kg of polymer per gram of solid catalyst component is obtained and the polyethylene produced shows the following characteristics:
- density: 0.9640 g/ml;
- MFI (2.16 kg): 1.40 g/10';
- MFI (21.6 kg)/MFI (2.16 kg): 53.3;
- apparent density: 0.44 g/ml;
- granule size (µm):

| | |
|---|---|
| ≧2000 | 0.0% by weight |
| <2000 - ≧1000 | 30.8% by weight |
| <1000 - ≧ 500 | 34.8% by weight |
| < 500 - ≧ 125 | 34.1% by weight |
| < 125 | 0.3% by weight |

### EXAMPLE 7

A similar procedure as in example 6 is followed, using the solid catalyst component of example 4 and charging the reactor with an ethylene:butene:hydrogen mixture (1:1:0.3 by volume).

A yield of 8.5 kg of ethylene-butene-1 copolymer per gram of solid catalyst component is obtained and the product shows the following characteristics:
- density: 0.9450 g/ml;
- MFI (2.16 kg): 1.3 g/10';
- MFI (21.6 kg)/MFI (2.16 kg): 37.5;
- apparent density: 0.53 g/ml;
- granule size (µm):

| | |
|---|---|
| ≧2000 | 0.0% by weight |
| <2000 - ≧1000 | 21.2% by weight |
| <1000 - ≧ 500 | 43.5% by weight |
| < 500 - ≧ 125 | 35.1% by weight |
| ≦ 125 | 0.2% by weight |

## Claims

1. Process for the preparation of a solid component of a catalyst for the (co)polymerization of ethylene which contains magnesium, chlorine, silicon, titanium and at least one other metal selected from hafnium, zirconium and vanadium supported on a granular solid carrier, said process comprising the following steps:
(i) adsorbing a compound of a metal M selected from hafnium, zirconium and vanadium on a non-activated, solid, granular and porous carrier by contacting said carrier with a solution of said compound of the metal M in an organic solvent, followed by removal of the solvent;
(ii) impregnating the solid carrier of step (i) by contacting it with a solution of a dialkyl magnesium and/or an alkyl magnesium halide in an organic solvent, followed by removal of the solvent;
(iii)contacting the solid carrier of step (ii) with a silicon chloride; and
(iv) contacting the solid carrier of step (iii) with a titanium compound;
the amount of said carrier in said solid catalyst component being adjusted to from 30 to 90% by weight and the atomic ratios of titanium, metal M, magnesium and silicon being adjusted as follows: Ti : M : Mg : Si = 1 : 0.1 - 3 : 1 - 20 : 0.1 - 50.

2. Process according to claim 1, wherein in step (i) a microspheroidal silica having an average particle size of from 20 to 100 µm, a BET surface area of from 150 to 400 m²/g, a total porosity of at least 60% and a pore radius of from 5 to 20 nm is used.

3. Process according to any one of claims 1 and 2, wherein in step (i) a chloride, oxychloride and/or alkoxide, preferably a chloride, of vanadium, zirconium and/or hafnium is used.

4. Process according to any one of claims 1 to 3, wherein in step (i) a solution of the compound(s) of metal M in an organic solvent selected from alkyl esters of aliphatic and aromatic carboxylic acids and aliphatic ethers, especially cyclic ethers, is prepared and to the solution thus obtained the granular carrier is added in such an amount as to result in a weight ratio carrier/compound(s) of metal(s) M of at least 2/1 and the impregnation of the carrier is carried out by heating the resulting suspension at a temperature above room temperature.

5. Process according to any one of claims 1 to 4, wherein in step (ii) the dialkyl magnesium and/or alkyl magnesium chloride is selected from compounds of formulae MgR'R'' and MgRX wherein R', R'' and R independently represent linear or branched C₁-C₁₀ alkyl and X represents halogen, preferably chlorine, particularly from diethyl magnesium, ethyl butyl magnesium, dihexyl magnesium, butyl octyl magnesium, dioctyl magnesium, the corresponding chloro derivatives and mixtures of said compounds.

6. Process according to any one of claims 1 to 5, wherein said dialkyl magnesium and/or alkyl magnesium halide is dissolved in a hydrocarbon solvent, to the resulting solution the impregnated carrier of step (i) is added, adjusting the molar ratio magnesium compound(s)/compound(s) of metal(s) M at values of at least 1/1, and the resulting suspension is kept at a temperature of from room temperature to the boiling point of the solvent used, for a period of time from about 10 minutes to about 2 hours.

7. Process according to any one of claims 1 to 6, wherein in step (iii) the silicon chloride is selected from silicon tetrachloride and chlorosilanes and preferably is silicon tetrachloride.

8. Process according to any one of claims 1 to 7, wherein in step (iii) the solid obtained after step (ii) is suspended in a hydrocarbon solvent, a silicon chloride is added thereto and the resulting mixture is heated at a temperature of from 40 to 100°C for from 0.5 to 5 hours.

9. Process according to any one of claims 1 to 8, wherein in step (iv) the titanium compound used is selected from the chloride, the alkoxides and chloro alkoxides of titanium and preferably from titanium tetrachloride, titanium tetra-n-propylate, titanium tetra-n-butylate, titanium tetra-i-propylate, titanium tetra-i-butylate, the corresponding titanium mono- and di-chloro alkoxides and mixtures of said compounds.

10. Process according to any one of claims 1 to 9, wherein in step (iv) the solid obtained after step (iii) is suspended in a hydrocarbon solvent, the titanium compound is added thereto in an amount such as to result in an atomic ratio titanium/silicon (in the silicon chloride(s) of step (iii)) of 1/3-40, and the resulting mixture is kept at a temperature of from 50 to 100°C for from 0.5 to 5 hours.

11. Process according to any one of claims 1 to 10, wherein the concentration of carrier is adjusted to from 40 to 70% by weight of the solid catalyst component and the atmic ratios in the catalytically active portion thereof are adjusted as follows: Ti : M : Mg = 1 : 0.5 - 2 : 2 - 8.

12. Process according to any one of claims 1 to 11, further comprising, at the end of step (iv), the activation of the solid catalyst component by contacting it with an alkyl aluminium chloride, preferably by working in suspension in a hydrocarbon solvent, with a molar ratio of chlorine atoms in the aluminium compound to alkoxy groups of the titanium alkoxide and/or chloro alkoxide of from 0.1/1 to 10/1, at a temperature of from 10 to 100°C and for 10 minutes to 5 hours.

## Patentansprüche

1. Verfahren zur Herstellung einer festen Komponente eines Katalysators für die (Co)polymerisation von Ethylen, die Magnesium, Chlor, Silicium, Titan und mindestens ein anderes Metall, ausgewählt aus Hafnium, Zirkonium und Vanadium, auf einem kornförmigen festen Träger getragen enthält, umfassend die folgenden Stufen:
(i) Adsorption einer Verbindung eines Metalls M, das aus Hafnium, Zirkonium und Vanadium ausgewählt ist, auf einem nicht-aktivierten, festen, kornförmigen und porösen Träger durch Kontaktieren des Trägers mit einer Lösung der Verbindung des Metalls M in einem organischen Lösungsmittel, gefolgt von der Entfernung des Lösungsmittels;
(ii) Imprägnierung des festen Trägers von Stufe (i) durch Kontaktieren desselben mit einer Lösung eines Dialkylmagnesiums und/oder eines Alkylmagnesiumhalogenids in einem organischen Lösungsmittel, gefolgt von der Entfernung des Lösungsmittels;
(iii)Kontaktieren des festen Trägers von Stufe (ii) mit einem Siliciumchlorid; und
(iv) Kontaktieren des festen Trägers von Stufe (iii) mit einer Titan-Verbindung;
wobei die Menge an Träger in der festen Katalysator-Komponente auf 30 bis 90 Gewichts-% eingestellt wird und die Atomverhältnisse von Titan, Metall M, Magnesium und Silicium wie folgt eingestellt werden: Ti:M:Mg:Si = 1:0,1 - 3:1 - 20:0,1 - 50.

2. Verfahren nach Anspruch 1, in welchem in Stufe (i) ein mikrospheroidales Siliciumdioxid mit einer durchschnittlichen Teilchengröße von 20 bis 100 µm, einer BET-Oberfläche von 150 bis 400 m²/g, einer Gesamtporosität von mindestens 60% und einem Porenradius von 5 bis 20 nm eingesetzt wird.

3. Verfahren nach irgendeinem der Ansprüche 1 und 2, in welchem in Stufe (i) ein Chlorid, Oxychlorid und/oder Alkoxid, vorzugsweise ein Chlorid, von Vanadium, Zirkonium und/oder Hafnium eingesetzt wird.

4. Verfahren nach irgendeinem der Ansprüche 1 bis 3, in welchem in Stufe (i) eine Lösung der Verbindung(en) des Metalls M in einem organischen Lösungsmittel, ausgewählt aus Alkylestern von aliphatischen und aromatischen Carbonsäuren und aliphatischen Ethern, insbesondere cyclischen Ethern, hergestellt und die so erhaltene Lösung in einer solchen Menge dem kornförmigen Träger zugesetzt wird, daß sie zu einem Gewichtsverhältnis Träger/Verbindung(en) von Metall(en) M von mindestens 2/1 führt, und die Imprägnierung des Trägers durch Erwärmen der resultierenden Suspension bei einer Temperatur oberhalb von Raumtemperatur durchgeführt wird.

5. Verfahren nach irgendeinem der Ansprüche 1 bis 4, in welchem in Stufe (ii) das Dialkylmagnesium und/oder Alkylmagnesiumchlorid aus Verbindungen der Formeln MgR'R'' und MgRX, worin R', R'' und R unabhängig lineares oder verzweigtes C₁-C₁₀-Alkyl darstellen und X für Halogen, vorzugsweise Chlor, steht, insbesondere aus Diethylmagnesium, Ethylbutylmagnesium, Dihexylmagnesium, Butyloctylmagnesium, Dioctylmagnesium, den entsprechenden Chlor-Derivaten und Mischungen dieser Verbindungen, ausgewählt wird.

6. Verfahren nach irgendeinem der Ansprüche 1 bis 5, in welchem das Dialkylmagnesium und/oder Alkylmagnesiumhalogenid in einem Kohlenwasserstoff-Lösungsmittel gelöst wird, der resultierenden Lösung der imprägnierte Träger von Stufe (i) zugesetzt wird, wobei das Molverhältnis Magnesium-Verbindung(en)/Verbindung(en) von Metall(en) M bei Werten von mindestens 1/1 eingestellt wird, und die resultierende Suspension für eine Zeitspanne von etwa 10 Minuten bis etwa 2 Stunden bei einer Temperatur von Raumtemperatur bis zum Siedepunkt des eingesetzten Lösungsmittels gehalten wird.

7. Verfahren nach irgendeinem der Ansprüche 1 bis 6, in welchem in Stufe (iii) das Siliciumchlorid aus Siliciumtetrachlorid und Chlorsilanen ausgewählt wird und vorzugsweise Siliciumtetrachlorid ist.

8. Verfahren nach irgendeinem der Ansprüche 1 bis 7, in welchem in Stufe (iii) der nach Stufe (ii) erhaltene Feststoff in einem Kohlenwasserstoff-Lösungsmittel suspendiert wird, ein Siliciumchlorid dazugegeben wird und die resultierende Mischung 0,5 bi 5 Stunden lang bei einer Temperatur von 40 bis 100°C erwärmt wird.

9. Verfahren nach irgendeinem der Ansprüche 1 bis 8, in welchem in Stufe (iv) die eingesetzte Titan-Verbindung ausgewählt wird aus dem Chlorid, den Alkoxiden und Chloralkoxiden von Titan und vorzugsweise aus Titantetrachlorid, Titantetra-n-propylat, Titantetra-n-butylat, Titantetra-i-propylat, Titantetra-i-butylat, den entsprechenden Titanmono- und -dichloralkoxiden und Mischungen dieser Verbindungen.

10. Verfahren nach irgendeinem der Ansprüche 1 bis 9, in welchem in Stufe (iv) der nach Stufe (iii) erhaltene Feststoff in einem Kohlenwasserstoff-Lösungsmittel suspendiert wird, die Titan-Verbindung in einer solchen Menge dazugegeben wird, daß sie in einem Atomverhältnis Titan/Silicium (in dem bzw. den Siliciumchlorid(en) von Stufe (iii)) von 1/3 - 40 resultiert, und die resultierende Mischung 0,5 bis 5 Stunden bei einer Temperatur von 50 bis 100°C gehalten wird.

11. Verfahren nach irgendeinem der Ansprüche 1 bis 10, in welchem die Träger-Konzentration auf 40 bis 70 Gewichts% der festen Katalysator-Komponente eingestellt wird und die Atomverhältnisse im katalytisch aktiven Teil davon wie folgt eingestellt werden: Ti:M:Mg = 1:0,5 - 2:2 - 8.

12. Verfahren nach irgendeinem der Ansprüche 1 bis 11, weiter umfassend, am Ende der Stufe (iv), die Aktivierung der festen Katalysator-Komponente durch Kontaktieren derselben mit einem Alkylaluminiumchlorid, vorzugsweise durch Arbeiten in Suspension in einem Kohlenwasserstoff-Lösungsmittel, mit einem Molverhältnis von Chloratomen in der Aluminium-Verbindung zu Alkoxygruppen des Titanalkoxids und/oder Chloralkoxids von 0,1/1 bis 10/1, bei einer Temperatur von 10 bis 100°C und 10 Minuten bis 5 Stunden lang.

## Revendications

1. Procédé de préparation d'un composant solide de catalyseur pour la (co)polymérisation d'éthylène contenant du magnésium, du chlore, de la silice, du titane et au moins un autre métal choisi parmi l'hafnium, le zirconium et le vanadium, supporté sur un support solide granulaire, ledit procédé comprenant les étapes suivantes :
(i) absorption d'un composé d'un métal choisi parmi l'hafnium, le zirconium et le vanadium, sur un support granulaire poreux, solide et non activé, en mettant en contact ledit support avec une solution dudit composé de métal dans un solvant organique, suivi de l'élimination du solvant ;
(ii) imprégnation du support solide de l'étape (i) en le mettant en contact avec une solution d'un halogénure de dialkyle de magnésium et/ou d'alkyle de magnésium dans un solvant organique, suivi de l'élimination du solvant ;
(iii) mise en contact du support solide de l'étape (ii) avec un chlorure de silice ;
(iv) mise en contact du support solide de l'étape (iii) avec un composé de titane;
la teneur dudit support en ledit composant solide de catalyseur étant ajustée de 30 à 90% en poids et le rapport atomique de titane, métal M, magnésium et silicium étant ajusté comme suit : Ti : M : Mg : Si = 1 : 0,1 - 3 : 1 - 20 : 0,1 - 50.

2. Procédé selon la revendication 1, caractérisé en ce que l'on utilise dans l'étape (i) une silice microsphéroïdale ayant un diamètre moyen de particule de 20 à 100 µm, une surface BET de 150 à 400 m²/g, une porosité totale d'au moins 60% et un diamètre de pore de 5 à 20 nm.

3. Procédé selon l'une des revendications 1 et 2, caractérisé en ce que dans l'étape (i) on utilise un chlorure, un oxychlorure et/ou un alcoolate, de préférence un chlorure, de vanadium, de zirconium et/ou d'hafnium.

4. Procédé selon l'une quelconque des revendications 1 à 3, caractérisé en ce que l'on prépare dans l'étape (i) une solution du ou des composés de métal M dans un solvant organique choisi parmi les esters d'alkyle et d'acides carboxyliques aliphatiques et aromatiques et les éthers aliphatiques, plus particulièrement les éthers cycliques, et on ajoute à la solution ainsi obtenue le support granulaire dans une quantité telle qu'il en résulte un rapport pondéral du support au(x) composé(s) de métal(aux) M d'au moins 2/1, et l'imprégnation du support est effectuée par chauffage de la suspension obtenue à une température supérieure à la température ambiante.

5. Procédé selon l'une quelconque des revendications 1 à 4, caractérisé en ce que dans l'étape (ii), le chlorure de dialkyle de magnésium et/ou d'alkyle de magnésium est choisi parmi les composés de formules MgR'R'' et MgRX dans lesquelles R', R'' et R indépendamment l'un de l'autre, représentent un radical alkyle linéaire ou ramifié en C₁-C₁₀ et X représente un halogène, de préférence le chlorure, et particulièrement parmi le diéthyle de magnésium, l'éthylbutyle de magnésium, lede dihexyle de magnésium, le butyloctyle de magnésium, le dioctyle de magnésium, les dérivés chlorure correspondants et les mélanges de ces composés.

6. Procédé selon l'une quelconque des revendications 1 à 5, caractérisé en ce que dans l'étape (ii) le chlorure de dialkyle de magnésium et/ou d'alkyle de magnésium est dissout dans un solvant hydrocarboné, à la solution résultante on ajoute le support imprégné de l'étape (i) en ajustant le rapport molaire du composé à base de magnésium au(x) composé(s) de métal(aux) M à une valeur d'au moins 1/1, et la suspension résultante est maintenue à une température comprise entre la température ambiante et le point d'ébullition du solvant utilisé, pendant environ 10 minutes à environ 2 heures.

7. Procédé selon l'une quelconque des revendications 1 à 6, caractérisé en ce que dans l'étape (iii) le chlorure de silicium est choisi parmi le tétrachlorure de silicium et les chlorosilanes, et est de préférence le tétrachlorure de silicium.

8. Procédé selon l'une quelconque des revendications 1 à 7, caractérisé en ce que dans l'étape (iii) le solide obtenu après l'étape (ii) est mis en suspension dans un solvant hydrocarboné, on y ajoute un chlorure de silicium et le mélange résultant est chauffé à une température de 40 à 100°C pendant 0,5 à 5 heures.

9. Procédé selon l'une quelconque des revendications 1 à 8, caractérisé en ce que dans l'étape (iv) le composé de titane utilisé est choisi parmi le chlorure, les alcoolates et les chloroalcoolates de titane et de préférence parmi le tétrachlorure de titane, le tétra-n-propylate de titane, le tétra-n-butylate de titane, le tétra-i-propylate de titane, le tétra-i-butylate de titane, les mono et dichloroalcoolates de titane correspondants et des mélanges de ces composés.

10. Procédé selon l'une quelconque des revendications 1 à 9, caractérisé en ce que dans l'étape (iv) le solide obtenu après l'étape (iii) est mis en suspension dans un solvant hydrocarboné, on y ajoute le composé de titane dans une quantité telle que l'on obtienne un rapport atomique du titane au silicium (présent dans les chlorures de silicium de l'étape (iii)) de 1/3-40, et on maintient le mélange obtenu à une température de 50 à 100°C pendant 0,5 à 5 heures.

11. Procédé selon l'une quelconque des revendications 1 à 10, caractérisé en ce que la concentration en support est ajustée de 40 à 70% en poids d'un composant solide de catalyseur et les rapports atomiques dans la partie catalytiquement active dudit catalyseur sont ajustés comme suit :
Ti : M : Mg = 1 : 0,5 - 2 : 2 - 8.

12. Procédé selon l'une quelconque des revendications 1 à 11, comprenant également après la fin de l'étape (iv) l'activation du composant solide de catalyseur en le mettant en contact avec un chlorure d'alkyl d'aluminium, de préférence en effectuant ceci en suspension dans un solvant hydrocarboné, avec un rapport molaire d'atomes de chlorure présents dans le composé à base d'aluminium au groupement alcoxy de l'alcoolate et/ou le chloroalcoolate de titane de 0,1/1 à 10/1, à une température de 10 à 100°C et pendant 10 minutes à 5 heures.
